Europäisches Patentamt

European Patent Office

Office européen des brevets

(11) Publication number: **0 345 963 B1**

# EUROPEAN PATENT SPECIFICATION

(45) Date of publication of patent specification: **09.08.95** (51) Int. Cl.⁶: **B61D 17/10**, B61F 1/00, B61D 17/04

(21) Application number: **89305195.3**

(22) Date of filing: **23.05.89**

(54) **Car body for railway rolling stock and method of fabricating car body.**

(30) Priority: **06.06.88 JP 137569/88**
      **18.01.89 JP 7802/89**
      **01.02.89 JP 20732/89**

(43) Date of publication of application:
      **13.12.89 Bulletin 89/50**

(45) Publication of the grant of the patent:
      **09.08.95 Bulletin 95/32**

(84) Designated Contracting States:
      **DE FR GB IT**

(56) References cited:
      **DE-C- 877 155**
      **DE-C- 896 052**
      **GB-A- 912 635**
      **GB-A- 2 050 275**
      **US-A- 3 708 938**

(73) Proprietor: **HITACHI, LTD.**
      **6, Kanda Surugadai 4-chome**
      **Chiyoda-ku,**
      **Tokyo 101 (JP)**

(72) Inventor: **Okuno, Sumio**
      **1038-33, Kouchi Tanaka**
      **Kudamatsu-shi**

Yamaguchi-ken (JP)
Inventor: **Ohmura, Keiji**
**1611-10 Nishitoyoi**
**Kudamatsu-shi**
Yamaguchi-ken (JP)
Inventor: **Takeichi, Michifumi**
**428-1, Higashitoyoi**
**Kudamatsu-shi**
Yamaguchi-ken (JP)
Inventor: **Okazaki, Masato**
**2-2 Hataoka 5-chome**
**Kudamatsu-shi**
Yamaguchi-ken (JP)
Inventor: **Tsuruda, Hitoshi**
**1166 Higashitoyoi**
**Kudamatsu-shi**
Yamaguchi-ken (JP)
Inventor: **Yamada, Hiroyuki**
**1598-35, Nishitoyoi**
**Kudamatsu-shi**
Yamaguchi-ken (JP)
Inventor: **Hattori, Morishige**
**2-31 Kotohira-cho**
**Kudamatsu-shi**
Yamaguchi-ken (JP)

EP 0 345 963 B1

Inventor: **Kimura, Kenji**
**177-12, Nishitoyoi**
**Kudamatsu-shi**
**Yamaguchi-ken (JP)**

(74) Representative: **Calderbank, Thomas Roger et al**
**MEWBURN ELLIS**
**York House**
**23 Kingsway**
**London WC2B 6HP (GB)**

## Description

The present invention relates to a car body for a railway rolling stock, and particularly to a car body for a railway rolling stock, which is suitable for a railway rolling stock which travels at high speeds, and a method of fabricating the car body.

For the purpose of reducing time required to arrive at destination and increasing a quantity of transportation, it has recently a tendency for a railway rolling stock to travel at higher speeds. When the rolling stock travels at high speeds, outside pressure of the vehicle varies particularly in a tunnel. This variation in external pressure is largest when the vehicles pass each other in the tunnel. In view of this, the car body of the railway rolling stock is air-tight structured to prevent the variation of external pressure from being propagated into the vehicle. Therefore, the variation of external pressure directly acts on the car body. Accordingly, it has been necessary to provide a car body construction enduring the variation of external pressure.

On the other hand, when the railway rolling stock is made to travel at high speeds, the tracks are greatly affected, and therefore, it has been necessary to reduce the weight of the car body.

Contemplated to meet these requirements is a car body in which a widthwise section of a car body is formed to be circular. An example of such a car body of a railway rolling stock is disclosed, for example, in Japanese Utility Model Registration Application Laid-Open No. 151309/1976. This car body construction has a circular curved surface in which both side walls and a roof are continuous on a flat underframe.

When the pressure caused by variations of external pressure acts on the car body, tension within the surface acts on the outer plate since both the side walls and the roof are of a circular curved surface. Therefore, the bending moment outside the surface acting on the outer plate of both the side walls and the roof can be reduced. However, since the underframe is of a flat construction, when the external pressure acts, a large bending moment acts on the underframe.

It has therefore been necessary to provide a very rigid underframe, in order to overcome such a bending moment. In order to increase the strength of the underframe, the various members forming the underframe need be strengthened, and the weight of the car body increases. The increase in weight of the car body is not desirable for high-speed rolling stock.

Railway rolling stock which travels at high speeds may contain electric apparatus having a large capacity. Such electric apparatus is normally mounted on the lower surface of the underframe, that is, on the under-floor. Accordingly, the underframe needs to have sufficient strength to support the electric apparatus. This leads to an increase in the weight of the underframe.

DE-C-877155 discloses a railway car body having an elongate underframe, side constructions connected to the side sills of the underframe, a roof construction and end constructions. This document thus corresponds to the pre-characterising part of claim 1.

In DE-C-877155, the underframe has a planar upper surface and a curved lower surface with longitudinal beams therebetween. The planar upper surface thus acts as a floor member extending between the side sills and defining the boundary between the inside and the outside of the car body.

According to a first aspect of the present invention, the underframe has horizontal cross beams connected to and extending between the side sills outside the car body;

the floor member is curved such that its longitudinal side edges, which are connected to the side sills are higher than its longitudinal centre line; and

the outside surface of the floor member is connected to the cross beams.

It may be noted that DE-C-896052 discloses a railway car body in which part of the floor member is curved.

According to a second aspect of the present invention there is provided an underframe for a railway car body, the underframe being elongate with side sills along the longitudinal edges thereof, and having a floor member extending between the side sills;

wherein:

the underframe has cross beams connected to and extending between the side sills;

the floor member is curved such that it has a concave inner surface and a convex outside surface, and its longitudinal side edges, which are connected to the side sills are higher than its longitudinal centre line; and

the outside surface of the floor member is connected to the cross beams with the cross beams being on the side of the floor member corresponding to the convex outer surface.

According to a third aspect of the present invention there is provided a method of fabricating a railway car body, comprising:

forming a roof construction, side constructions, and end constructions;

interconnecting side sills with horizontal cross beams, and securing a floor member to the side sills and the cross beams thereby to form an underframe;

connecting the side constructions to the side sills of the underframe, and connecting the end and roof constructions thereto;

wherein the floor member is curved such that it has a concave inner surface and a convex outside surface, and its longitudinal side edges, which are connected to the side sills are higher than its longitudinal centre line; and

the outside surface of the floor member is connected to the cross beams with the cross beams being on the side of the floor member corresponding to the convex outer surface.

Embodiments of the present invention will now be described in detail, by way of example, with reference to the accompanying drawings, in which:

Fig 1 is a transverse (widthwise) perspective view showing a first embodiment of a car body according to the present invention;

Fig 2 is a sectional view along the line II-II of Fig 1;

Fig 3 is a sectional view of a cylindrical vessel showing dynamic characteristics of the cylindrical vessel;

Fig 4 is a sectional view of a flat plate showing the dynamic characteristics of the flat plate;

Fig 5 is a transverse sectional view showing the lower portion of a side construction and an underframe in a second embodiment of a car body according to the present invention;

FIG. 6 is a sectional view widthwise of a car body of a lower portion of a side construction and an under frame in a third embodiment of the car body according to the present invention;

FIG. 7 is a sectional view widthwise of a car body of a lower portion of a side construction and an underframe in a fourth embodiment of the car body according to the present invention;

FIG. 8 is a sectional view widthwise of a car body of a lower portion of a side construction and an underframe in a fifth embodiment of the car body according to the present invention;

FIG. 9 is a perspective view of a widthwise section of a car body in a sixth embodiment of the car body according to the present invention ;

FIG. 10 is a side view of the underframe shown in FIG. 9 ;

FIG. 11 is a sectional view widthwise of a car body of a portion where a floor member of the underframe shown in FIG. 9 is installed ;

FIG. 12 is a sectional view taken on line XIII-XIII of a cross beam in FIG. 11 ;

FIG. 13 is a sectional view of a floor member supporting portion of an end underframe in FIG. 9; and

FIG. 14 is a front view of a floor member supporting portion of an end underframe in FIG. 13.

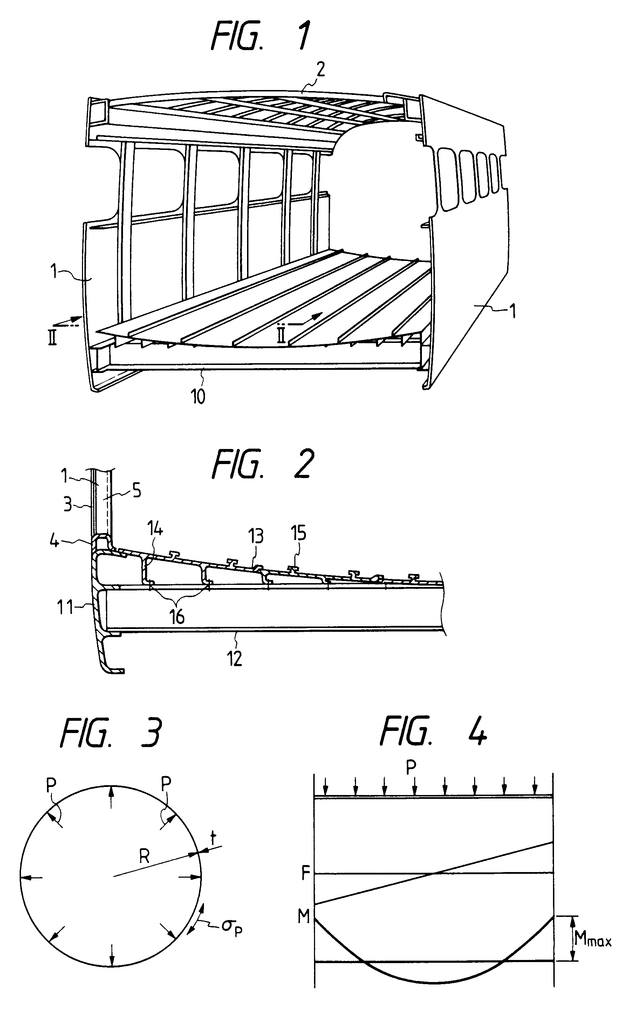

A first embodiment of the present invention will be described with reference to FIGS. 1 to 4. Numeral 1 denotes a side construction forming a side surface of a car body. Numeral 2 denotes a roof construction forming an upper surface, namely, a roof. Numeral 10 denotes an underframe forming a lower surface of the car body. The side construction 1 is composed of a side post 5, a horizontal rib member extending perpendicular to the side post 5 and a side outer plate 3 mounted externally thereof. A rocker rail 4 extending longitudinally of the body is mounted on the lower side of the side construction 1. The surface of the side outer plate 3 of the side construction has a externally convex curved surface in a vertical direction. The roof construction 2 is constructed so that a rib member extending in a longitudinal direction of the car body and a rib member extending widewise of the car body are combined and connected, and the roof outer plate is connected to the outer sides of these rib members. The surface of the roof outer plate of the roof construction 2 has an externally convex curved surface in a direction widthwise of the car body.

The construction of the underframe shown in FIG. 2 will be described. Numeral 11 denotes a side sills disposed on the end along lateral sides of the body and arranged so as to extend in a longitudinal direction of the body. The side sills 11 respectively disposed along lateral sides of the body of the underframe are parallel with each other. Numeral 12 denotes a cross beam arranged perpendicular to the side beam 11 between the two side sills 11. The end of the cross beam 12 is connected to the side sill 11. A plurality of cross beams 12 are arranged so that they are disposed parallel to each other in a longitudinal direction of the car body between said two side sills 11. The cross beam 12 has an I-shape cross section. Numeral 13 denotes a floor member mounted on the plurality of the cross beams 12. The upper surface of the floor member 13 is curved widthwise of the car body. The upper surface of the floor member 13 is preferably formed to have an arc surface having at least one radius of curvature. The floor member 13 is constructed by arranging a plurality of extruded shapes made of light weight alloy widthwise and connecting them. Connection of the aforesaid shapes or connection of the floor members 13 and the side sill 11 is carried out by arc welding to secure strength and airtightness. The extruded shapes made of light weight alloy has a rib 15 on the upper surface thereof and a supporting portion 14 on the lower surface thereof. The rib 15 and the supporting portion 14 are made integral with the extruded shapes made of light weight alloy. The plurality of supporting portions 14 are different in level from each other widewise, and one positioned close to the center of the underframe is lower in level. The floor member 13 is mounted on the cross beam 12 so that the upper surface thereof has a curved surface by the supporting portions 14. The rib 15 is formed so as to prevent buckling of the floor member 13. The rib 15 is utilized when mounting a seat provided in a compartment. The side sill 11 is formed with a flange to which is connected the cross beam 12 and a flange to which is connected the floor member 13. The outer surface of the side sill 11 forms a surface continuous to the surface of the side outer plate 3.

The operation of the car body of the railway rolling stock constructed as described above will be described.

The side construction 1 is constructed by placing the side post 5, the rocker rail 4 and the rib member perpendicular to the side post 5 and connecting them. The roof construction 2 is constructed by placing the longitudinal rib member and the widthwise rib member of the car body on the roof outer plate and connecting them. The underframe 10 is constructed as will be described below. The plurality of cross beams 12 are arranged between the two side sills 11 arranged parallel to each other and connected together. The floor member 13 is connected to the upper surface of the plurality of cross beams 12. The end construction forming the end in a longitudinal direction of the car body is constructed by combining the vertical rib member and the horizontal rib member and connecting the outer plate to the outer side of these rib members. The end construction is shown in the drawing and will not be described. The thus separately fabricated side construction 1, roof construction 2, end construction and underframe 10 are combined and connected to thereby constitute a car body.

As described above, the floor member 13 is mounted on the underframe 10 when the latter is fabricated. Then, the underframe 10, the side construction and the end construction are connected. Accordingly, connecting work of a plurality of light alloy extruded shapes which constitute the floor member 13 can be carried out on the cross beams 12 to improve the workability. The floor member 13 is small in connected surface because it is mounted on the cross beam 12 through the supporting portions 14. Therefore, mounting of the floor member 13 is carried out by spot welding instead of continuous welding. Accordingly, working time and labor can be reduced.

When the railway rolling stock travels within the tunnel at high speeds, and when the opposing vehicles pass each other, a great variation of external pressure occurs. When the railway rolling stock runs into the tunnel at high speeds or when it runs out of the tunnel at high speeds, a great variation of external pressure also occurs. The variation of external pressure as described above increases as the travel speed of the railway rolling stock increases.

The case where pressure acts on a cylindrical vessel will be described with reference to FIG. 3. When pressure P acts on the cylindrical vessel, no bending moment acts on the outer wall of the cylindrical vessel. The force acting on the outer wall is an insurface load, i.e., a membrane stress and becomes balanced. The membrane stress $\sigma p$ of the cylindrical vessel is given by equation (1) below:

$$\sigma p = PR/t \qquad (1)$$

wherein P is internal pressure applied to the cylindrical vessel, R is the radius of the cylindrical vessel, and t is the thickness of the outer wall of the cylindrical vessel.

Next, the case where pressure P acts on the flat plate will be described with reference to FIG. 4. When pressure P acts on the flat plate, no membrane stress occurs in the flat plate but shear force F and bending moment M corresponding to the pressure P occur.

The case where the aforesaid pressure acts on the underframe 10 of the present invention will be described. The pressure acts on the upper surface of the floor member 13 and is transmitted to the cross beam 12 through the supporting portion 14 of the floor member 13. The aforesaid pressure is mainly borne by the floor member 13 and the cross beam 12. The floor member 13, of which upper surface is formed into an arc curved surface widthwise of the car body, bears a part of said pressure as a membrane stress within the surface similar to the outer wall of the cylindrical vessel shown in FIG. 3. Accordingly, bending moment acting on the floor member 13 can be reduced.

On the other hand, the cross beam 12 and the floor member 13 which constitute the underframe 10 are connected through the supporting portions 14, and these behave as a one body. Accordingly, since the underframe 10 has its upper surface formed into a circular arc-like curved surface widthwise of the car body, the vertical dimension of the end widthwise of the car body of the underframe 10 is longer than that of the central portion widthwise of the car body. In the underframe 10, a portion close to the side sill 11 has a greater rigidy than that of a central portion widthwise of the car body. Bending rigidity in the underframe is proportional to cube of the vertical dimension of the underframe.

The distribution state widthwise of the bending moment acting on the underframe 10 is similar to the flat plate shown in FIG. 4. In the construction of the underframe 10, the bending moment increases as it comes close to the side sill 11. However, since the underframe 10 is longer in the vertical dimension of both the end portions widthwise, bending rigidity is high. Accordingly, the underframe 10 has its construction which is advantageous to bear the bending moment.

As described above, in the construction of the underframe 10, bending moment acting on the cross beam 12 can be considerably reduced in the conventional upper surface as compared with the flat underframe. Since the underframe 10 itself has a higher bending rigidity toward both the ends widthwise of the car body, sufficient rigidity can be secured. Thereby, the sectional shape of the cross beam 12 can be decreased or the thickness of parts of the cross beam 12 can be decreased to reduce the weight. The vertical dimension of the cross beam 12 is shortened whereby the vertical dimension of the whole underframe 10 can be shortened. Accordingly, in the case where various apparatuses are installed on the lower surface of the underframe 10, a sufficient space therefor can be secured. Particularly, in case of the high speed railway rolling stock, instruments mounted on the lower surface of the underframe, that is, under-floor becomes large in size, and therefore it is advantageous to enlarge a space of the lower surface of the underframe where apparatuses are installed.

As described above, the underframe 10 has the sufficient strength with respect to the variation of external pressure by mounting the floor member 13 having a circular arc-like curved surface. Further, the underframe 10 has a high bending rigidity in sectional shape widthwise of the car body by mounting the floor member 13. Accordingly, thicknesses of the side sill 11, cross beam 12 and floor member 13 constituting the underframe 10 can be reduced whereby the entire underframe 10 can be reduced in weight.

Since the side construction 10 and the roof construction 2 have their outer plate portions formed into an outwardly convex curved surface, it has a sufficient strength with respect to the variation of external pressure. Also, the side construction 1 and the roof construction can be reduced in weight. Thereby, the whole car body can be reduced in weight and a car body capable of withstanding the variation of external pressure can be obtained.

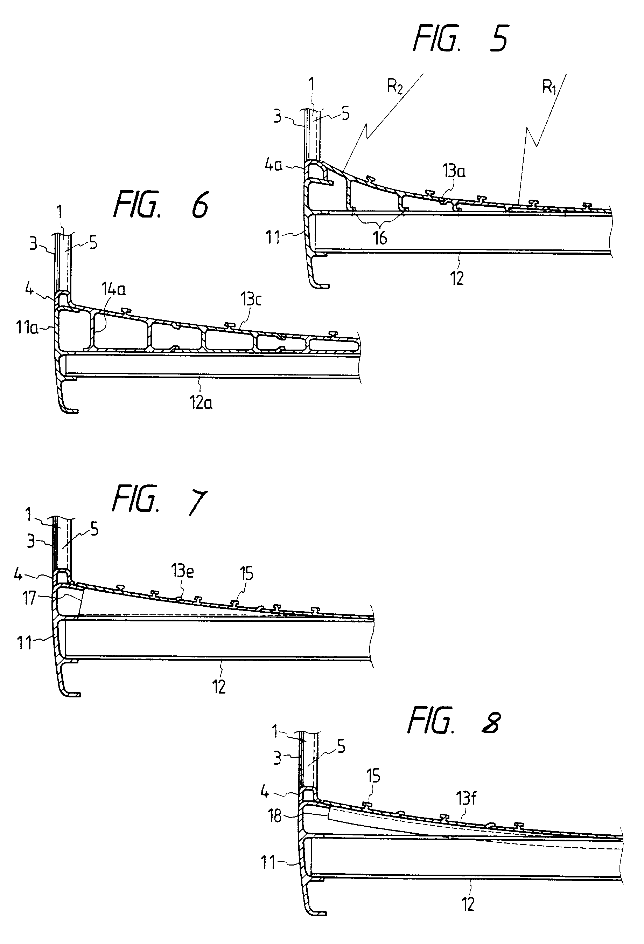

A second embodiment of the present invention will be described hereinafter with reference to FIG. 5.

Numeral 13a denotes a floor member in which a curved surface of a central portion widthwise of a car body has a radius of curvature $R_1$ and a curved surface on both end sides widthwise of a body has a radius of curvature $R_2$. ($R_1 > R_2$) Numeral 4a denotes a rocker rail constructed so as to support the end widewith of the car body of said floor member 13a. The end widthwise of body of the floor member 13a is mounted on the upper surface of the rocker rail 4a.

In the construction as described above, the end widthwise of the floor member 13a is connected to the upper surface of the rocker rail 4a when the underframe and the side construction are combined and connected.

In the underframe, the radius of curvature $R_2$ on the both end sides widthwise of a car body of the floor member 13a is made smaller than the radius of curvature $R_1$ of the central portion widthwise of body, whereby the vertical dimension of the end widthwise of the underframe can be lengthened. Accordingly, the bending rigidity widthwise of body of the underframe and in a longitudinal direction of the body can be further improved than that of the aforementioned first embodiment. This is advantageous in reducing weight of the underframe and the side construction. Those other than effects as described above are similar to those of the above-described first embodiment.

A third embodiment of the present invention will be described hereinafter with reference to FIG. 6.

In FIG. 6, the same reference numerals therein as those used in the first embodiment indicate the same elements. Numeral 13c denotes a floor member comprising an extruded shape made of light weight alloy having a hollow portion in which an upper surface and a lower surface are connected by partition walls 14a arranged in a fixed spaced apart relation. The floor member 13c is constructed by arranging widthwise a plurality of extruded shapes different in vertical dimension from each other. The upper surface of the floor member 13c has a circular arc-like curved surface. Numeral 12a denotes a cross beam in which its vertical dimension, that is, a height is lower than the cross beam 12 in the aforementioned first embodiment. Numeral 11a denotes a side sill in which a spacing of flanges to which the cross beam 12a is connected is narrowed while adjusting to the height of the cross beam 12a.

Since the floor member 13c is formed from extruded shapes made of light weight alloy having a hollow portion partitioned by the partition walls 14, the rigidity thereof is higher than that of the floor member 13 in the aforementioned first embodiment. Accordingly, the underframe has the aforesaid floor member 13c, and therefore the height of the cross beam 12a can be lowered. By lowering the height of the cross beam 12a, a space under the underframe where apparatuses are installed can be increased. The hollow portion of the floor member 13c can be utilized as an air conditioning duct to be connected to an air conditioner or a duct in which wires and various pipes are installed.

By narrowing the sectional area of the hollow portion of the floor member 13c, said hollow portion can be used as a space for piping. Those other than effects described above are similar to those mentioned in connection with the first embodiment.

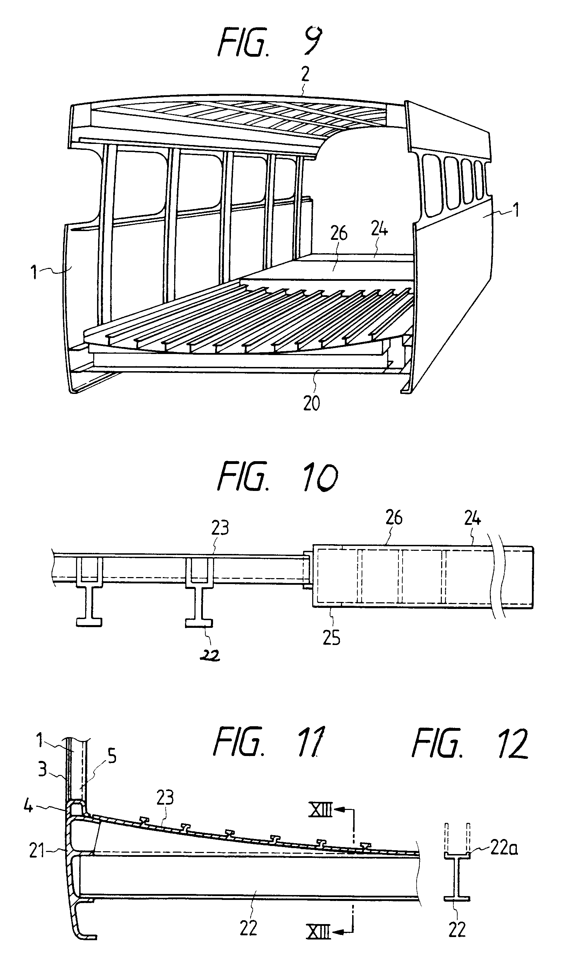

A fourth embodiment of the present invention will be described hereinafter with reference to FIG. 7.

In FIG. 7, the same reference numerals therein as those used in the aforementioned first embodiment indicate the same members. Numeral 13e denotes a floor member composed by extruded shapes made of light alloy in which a portion constituting a curved surface and a rib 15 are integrally formed. The floor member 13e is constructed by arranging widthwise said extruded shapes and connecting them. The upper surface of the floor member 13e is formed into a circular arc-like curved surface. Numeral 17 denotes a supporting member for supporting the floor member 13e on the cross beam 12. The supporting member 17 has its floor member supporting surface formed into a curved surface coincided with a curved surface of the floor member 13e. The sectional shape of the supporting member 17 is formed into an L-shape.

This underframe is fabricated in the following procedure.

First, the side beams 11 are arranged parallel with each other, between which the cross beam 12 is arranged, and they are connected. Next, the supporting member 17 is mounted on the cross beam 12. The floor member 13e is mounted on the supporting surface of the supporting member 17. After the underframe has been constructed as described above, the underframe is connected to the side construction and the end construction.

The floor member 13e is constructed by arranging and connecting widthwise a plurality of extruded shapes having the same sectional shape. Accordingly, the plurality of extruded shapes constituting the floor member 13e have the same sectional shape, and therefore, the extruded shapes themselves can be reduced in cost. That is, in fabrication of plural kinds of extruded shapes, a plurality of molds for fabricating each of extruded shapes are required. The molds for fabricating the extruded shapes are extremely expensive. Accordingly, in the case where a floor member is constructed by extruded shapes having a plurality of sectional shapes, cost of each of the shapes increases. By unifying the plurality of extruded shapes, cost of the extruded shapes can be reduced. Those other than effects as described above are similar to those described in the aforementioned first embodiment.

A fifth embodiment of the present invention will be described hereinafter with reference to FIG. 8.

In FIG. 8, the same reference numerals therein as those used in the aforementioned first embodiment indicate the same members. Numeral 13f denotes a floor member similar to that of the sixth embodiment. The floor member 13f has less number of ribs 15. Numeral 18 denotes a supporting member drawn between the side sills 11 on both sides widthwise of the car body. The supporting member 18 supports the floor member 13f on the cross beam 12. The supporting member 18 is fabricated by plastic process so that the upper surface thereof may have the same radius of curvature as that of the curved surface of the floor member 13f. The sectional shape of the supporting member 18 is an inverted L shape. Accordingly, the surface for supporting the floor member 13f of the supporting member 18 has a width to some extent. Since the floor member 13f extends in a longitudinal direction of the body, its fabrication work and transporting work are cumbersome. In view of this, the floor member 13f may be divided into a plurality of sections in a longitudinal direction of the car body and may be connected by the supporting surface of the supporting member 18.

After two side sills 11 and a plurality of cross beams 12 have been connected, a plurality of supporting members 18 are mounted between the side sills 11 and the floor member 13f is mounted on the supporting member 18. According to an alternative fabrication method, after the supporting member 18 has been mounted on the lower surface of the floor member 13f, the floor member 13f and the supporting member 18 are mounted between the two side sills 11.

Since the supporting member 18 is arranged to be drawn in a direction widthwise of the car body, the number of the supporting members 18 can be reduced to one half of that of the aforementioned fifth embodiment.

In the case where the floor member 13f is divided into a plurality of sections in a longitudinal direction of the body and supported by the supporting surface of the supporting member 18, the fabrication work and transporting work of the floor member 13f itself can be easily made. Those other than effects as described above are similar to those of the aforementioned embodiment 1.

A sixth embodiment of the present invention will be described hereinafter with reference to FIGS. 9 to 14

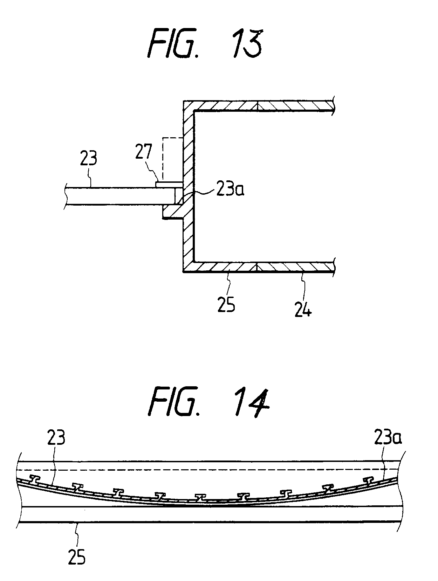

The side construction 1 and the roof construction 2 have the same construction as that shown in the aforementioned first embodiment. Numeral 20 denotes an underframe different in construction from each of the aforementioned embodiments. The underframe 20 is composed of two side sills 21 disposed on the end along lateral sides of the body and arranged so as to extend in a longitudinal direction of the body, a plurality of cross beams 22 disposed between two side sills 21, a floor member 23 installed above the cross beam 22 and a end underframe 24 installed at a position where trucks at both ends in a longitudinal direction of a car body of the underframe. The side sill 21 is formed in its inner surface with a plurality of flanges in which ends of a plurality of cross beams 22 and an end of the floor member 23 are connected. The cross beam 22 is arranged between the side sills 21 arranged parallel to each other with the end thereof connected to the flange of the side sill 21. The sectional shape of the cross beam 22 is Y-shape as shown in FIG. 13. The floor member supporting portion 22a of the cross beam 22 is formed so that the upper surface thereof has a radius of curvature corresponding to the curved surface of the floor member 23. The cross beam 22 is constructed by extruded shapes made of light weight alloy. The curved surface of the floor member supporting portion 22a is constructed by cutting the extruded shapes. The end widthwise of the body of the floor member supporting portion 22a is cut corresponding to the flange above the side sill 21. The floor member 23 is constructed by a plurality of extruded shapes made of light weight alloy similar to the aforementioned fifth and sixth embodiments. The end underframe 24 is constituted by a cross beam near the bolster 25 and a body bolster 26 arranged between the plurality of side sills 21. The cross beam near the bolster 25 and the body bolster 26 are connected to the side sill 21. The cross beam near the bolster 25 is arranged at a position close to the central portion in a longitudinal direction of the car body of the end underframe 24. The cross beam near the bolster 25 is formed from extruded shapes made of light weight alloy and composed of an upper flange, a lower flange and a web connecting said upper and lower flanges. The web is thick in thickness. By cutting and removing a portion of the web shown in the dotted line in FIG. 14, a floor member supporting portion 23a for supporting an end in a longitudinal direction of a car body of the floor member 23 is formed. The floor member supporting portion 23a has a curved surface having a radius of curvature coincided with a curved surface of the floor member 23. Numeral 27 denotes a keep member for keeping the end in a longitudinal direction of the car body of the floor member 23.

Two side sills 21 are arranged parallel to each other in a fixed spaced relation, and a plurality of cross beams 22, two cross beams near the bolster 25 and a plurality of body bolsters 26 are arranged and connected. The plurality of cross beams 22 are performed with the floor member supporting portions 22a. The floor member 23 is mounted above the plurality of cross beams 22. At this time, the end in a longitudinal direction of the car body of the floor member 23 is placed on the floor member supporting portion 23 of the cross beam near the bolster 25 and the contact portion is joined by welding.

The aforesaid beam is a member for transmitting a vertical load of the car body to the truck.

In the underframe, a body end load, that is, a tractive force or a braking force transmitted from a connector provided on the end in a longitudinal direction of the car body is received by the body bolster 26. The aforesaid body end load is transmitted from the body bolster 26 to the opposite beam through the side sill 21 and the floor member 23. The opposite beam transmits the car body end load to other car body through a separate connector. Since the floor member 23 has a curved surface in a direction widthwise of the car body, it has a sufficient strength with respect to tension load and compression load in a longitudinal direction of the car body. Accordingly, a part of the car body end load can be borne. A part of the body end load is borne by the floor member 23, whereby a body end load borne by the side sill 21 is reduced. Thereby, the side sill 21 can be reduced in thickness and in weight.

Since the side sill 21 is formed in its upper part with a floor member supporting portion 22a by cutting, a supporting member for supporting the floor member 23 is not required. Accordingly, the number of members constituting the underframe can be reduced. This can reduce time and labor required to fabricate the underframe. Since the floor member supporting member 23a is formed integral with the cross beam near the bolster 25, connecting work between the cross beam near the bolster 25 and the floor member 23 can be easily accomplished. By connecting the cross beam near the bolster 25 and the floor member 23 by welding, a sufficient air tightness can be secured and it can well withstand the car body end load. Those other than effects as described above are similar to those of the first, fifth and sixth embodiments.

As described above, according to the present invention, the underframe is formed with a curved surface having at least one or more radius of curvatures widthwise of a car body, whereby a car body of a railway rolling stock which is light in weight and capable of withstanding a variation of external pressure can be provided.

According to the present invention, the floor member, the cross beam or the end underframe cross beam are formed of extruded shapes whereby the number of members can be reduced. This facilitates fabrication of the underframe or the whole body.

According to the present invention, the strength of the whole underframe may be improved by the floor member provided on the underframe since the compression load on the end of the body is borne by the floor member. This is advantageous in reducing the weight of the underframe.

**Claims**

1. A railway car body comprising:

   an elongate underframe (10,20) with side sills (11,21) along the longitudinal edges thereof, side constructions (1) each connected to a respective side sill (11,21), a roof construction, and end constructions;

   the underframe (10,20) having a floor member (13,23) extending between the side sills (11,21) and defining the boundary between the inside and the outside of the car body;

   characterised in that:

   the underframe (10,20) has horizontal cross beams (12,22) connected to and extending between the side sills (11,21) outside the car body;

   the floor member (13,23) is curved such that its longitudinal side edges, which are connected to the side sills (11,21) are higher than its portion corresponding to the longitudinal centre line thereof; and

   the outside surface of the floor member (13,23) is connected to the cross beams (12,22).

2. A railway car body according to claim 1, wherein the longitudinal side edges of the floor member (13,23) are spaced from the cross beams (12,22), and the floor member (13,23) contacts the cross beams (12,22) at the portion corresponding to the longitudinal centre line of the former.

3. A railway car body according to claim 1, wherein the cross beams (12,22) have at least one upstanding flange with a curved upper surface contacting and conforming to the outer surface of the floor member (13,23).

4. A railway car body according to claim 3, wherein the cross beams (22) have two of said upstanding flanges so that the cross beams have a Y-shaped section.

5. A railway car body according to any one of the preceding claims, wherein the floor member (13,23) provides an air-tight barrier between the inside and outside of the car body.

6. A railway car body according to any one of the preceding claims, wherein the roof and side constructions (1) are interconnected and the side constructions (1) are connected to the underframe (10,20), to define an air-tight enclosure.

7. A railway car body according to any one of the preceding claims, wherein at least one of the end constructions has an end underframe joined to said underframe and to the side constructions (1) via the side sills (11,21), the end underframe including an end cross beam and a body bolster (26).

8. A railway car body according to any one of the preceding claims, wherein the floor member (13,23) comprises a plurality of shaped lightweight alloy members disposed side by side in a transverse direction of the car body.

9. A railway car body according to any one of claims 1 to 8, wherein the floor member (13,23) has an upper curved surface having at least one radius of curvature across the width of the car body.

10. A railway car body according to any one of claims 1 to 7, wherein the floor member (13,23) comprises extruded shapes having integral ribs (15) protruding from the upper surface thereof, the ribs extending in a longitudinal direction of the car body.

11. A railway car body according to any one of claims 1 to 7, wherein the side sills (11,21) have web surfaces continuous with the outer plate surfaces of respective side constructions (1).

12. A railway car body according to any one of claims 1 to 7, wherein the side constructions (1) have rocker rails connected to respective widthwise edges of the floor member (13,23).

13. A railway car body according to claim 7, wherein the end cross beam is at the edge of the end underframe which is closest to the longitudinal centre of the underframe (10,20), the end cross beam being made of lightweight alloy extruded shapes having increased web thickness, the web having a curved floor member supporting surface for supporting the floor member (13,23).

14. An underframe for a railway car body, the underframe (10,20) being elongate with side sills (11,21) along the longitudinal edges thereof, and having a floor member (13,23) extending between the side sills (11,21);

characterised in that:

the underframe (10,20) has cross beams (12,22) connected to and extending between the side sills (11,21);

the floor member (13,23) is curved such that it has a concave inner surface and a convex outside surface, and its longitudinal side edges, which are connected to the side sills (11,21) are higher than its portion corresponding to the longitudinal centre line thereof; and

the outside surface of the floor member (13,23) is connected to the cross beams (12,22) with the cross beams (12,22) being on the side of the floor member (13,23) corresponding to the convex outer surface.

15. An underframe according to claim 14, wherein the longitudinal side edges of the floor member (13,23) are spaced from the cross beams (12,22), and the floor member (13,23) contacts the cross beams (12,22) at the portion corresponding to the longitudinal centre line thereof.

16. An underframe according to claim 14, wherein the cross beams (12,22) have at least one upstanding flange with a curved upper surface contacting and conforming to the outer surface of the floor member (13,23).

17. An underframe according to claim 16, wherein the cross beams (22) have two of said upstanding flanges so that the cross beams have a Y-shaped section.

18. An underframe according to any one of claims 14 to 17, wherein the floor member (13,23) comprises extruded shapes, the upper surface of which is curved, having at least one radius of curvature across the width of the underframe.

19. An underframe according to any one of claims 14 to 17, having at least one end underframe joined to the underframe (10,20) via the side sills (11,21), the end underframe including an end cross beam and a body bolster (26).

20. An underframe according to claim 19, wherein the end cross beam (25) is at the edge of the end underframe which is closest to the longitudinal centre of the underframe (10,20), the end cross beam (25) being made of lightweight alloy extruded shapes with a thickness web, the web having a curved floor member supporting surface having the same curvature as the floor member (13,23) for supporting the floor member (13,23).

21. A method of fabricating a railway car body, comprising:

forming a roof construction, side constructions (1), and end constructions;

interconnecting side sills (11,21) with horizontal cross beams (12,22), and securing a floor member (13,23) to the side sills (11,21) and the cross beams (12,22) thereby to form an underframe;

connecting the side constructions (1) to the side sills (11,21) of the underframe (10,20), and connecting the end and roof constructions thereto;

wherein the floor member (13,23) is curved such that it has a concave inner surface and a convex outside surface, and its longitudinal side edges, which are connected to the side sills (11,21) are higher than its portion corresponding to the longitudinal centre line thereof: and

the outside surface of the floor member (13,23) is connected to the cross beams (12,22) with the cross beams (12,22) being on the side of the floor member (13,23) corresponding to the convex outer surface.

**Patentansprüche**

1. Eisenbahnwagenaufbau, mit:

einem länglichen Unterrahmen (10, 20) mit Seitenschwellern (11, 21) längs seiner Längskanten, Seitenaufbauten (1), die jeweils mit einem entsprechenden Seitenschweller (11, 21) verbunden sind, einem Dachaufbau und Endaufbauten;

der Unterrahmen (10, 20) weist ein Bodenteil (13, 23) auf, das sich zwischen den Seitenschwellern (11, 21) erstreckt und die Abgrenzung zwischen der Innenseite und der Außenseite des Wagenaufbaus bildet;

dadurch **gekennzeichnet**, daß

der Unterrahmen (10, 20) horizontale Querträger (11, 22) aufweist, die mit den Seitenschwellern (11, 21) außerhalb des Wagenaufbaus verbunden sind und sich zwischen diesen erstrecken;

das Bodenteil (13, 23) so gekrümmt ist, daß seine Längsseitenkanten, die mit den Seitenschwellern (11, 21) verbunden sind, höher liegen als sein Abschnitt, der seiner Längsmittellinie entspricht; und

die Außenfläche des Bodenteils (13, 23) mit den Querträgern (12, 22) verbunden ist.

2. Eisenbahnwagenaufbau nach Anspruch 1, worin die Längsseitenkanten des Bodenteils (13, 23) zu den Querträgern (12, 22) einen Abstand aufweisen und das Bodenteil (13, 23) die Querträger (12, 22) an dem Abschnitt berührt, der deren Längsmittellinie entspricht.

3. Eisenbahnwagenaufbau nach Anspruch 1, worin die Querträger (12, 22) mindestens einen aufrechten Flansch mit einer gekrümmten oberen Fläche aufweisen, die die Außenfläche des Bodenteils (13, 23) berührt und mit dieser übereinstimmt.

4. Eisenbahnwagenaufbau nach Anspruch 3, worin die Querträger (22) zwei der genannten aufrechten Flansche aufweisen, so daß die Querträger einen Y-förmigen Querschnitt aufweisen.

5. Eisenbahnwagenaufbau nach irgendeinem der vorangehenden Ansprüche, worin das Bodenteil (13, 23) eine luftdichte Sperre zwischen der Innenseite und der Außenseite des Wagenaufbaus herstellt.

6. Eisenbahnwagenaufbau nach irgendeinem der vorangehenden Ansprüche, worin der Dachaufbau und die Seitenaufbauten (1) miteinander verbunden sind, und die Seitenaufbauten (1) mit dem Unterrahmen (10, 20) verbunden sind, um eine luftdichte Umhüllung zu bilden.

7. Eisenbahnwagenaufbau nach irgendeinem der vorangehenden Ansprüche, worin mindestens einer der Endaufbauten einen End-Unterrahmen aufweist, der an den genannten Unterrahmen und an die Seitenaufbauten (1) über die Seitenschweller (11, 21) angefügt ist, wobei der Endunterrahmen einen Endquerträger und einen Achsschemel (26) des Aufbaus umfaßt.

8. Eisenbahnwagenaufbau nach irgendeinem der vorangehenden Ansprüche, worin das Bodenteil (13, 23) eine Anzahl geformter Teile aus Leichtmetalllegierung aufweist, die nebeneinanderliegend in Querrichtung des Wagenaufbaus angeordnet sind.

9. Eisenbahnwagenaufbau nach irgendeinem der Ansprüche 1 bis 8, worin das Bodenteil (13, 23) eine obere gekrümmte Fläche aufweist, die mindestens einen Krümmungsradius quer zur Breite des Wagenaufbaus aufweist.

10. Eisenbahnwagenaufbau nach irgendeinem der Ansprüche 1 bis 7, worin das Bodenteil (13, 23) extrudierte Formen mit integrierten Rippen (15) aufweist, die von seiner oberen Fläche abstehen, wobei sich die Rippen in Längsrichtung des Wagenaufbaus erstrecken.

11. Eisenbahnwagenaufbau nach irgendeinem der Ansprüche 1 bis 7, worin die Seitenschweller (11, 21) Stegflächen aufweisen, die in die äußeren Blechflächen der jeweiligen Seitenaufbauten (1) kontinuierlich übergehen.

12. Eisenbahnwagenaufbau nach irgendeinem der Ansprüche 1 bis 7, worin die Seitenaufbauten (1) Pendelschienen aufweisen, die mit den jeweiligen Querkanten des Bodenteils (13, 23) verbunden sind.

13. Eisenbahnwagenaufbau nach Anspruch 7, worin sich der Endquerträger an der Kante des Endunterrahmens befindet, die der Längsmitte des Unterrahmens (10, 20) nächstgelegen ist, wobei der Endquerträger aus aus Leichtmetalllegierung extrudierten Formen mit erhöhter Stegdicke hergestellt ist, wobei der Steg eine gekrümmte, das Bodenteil abstützende Fläche zum Abstützen des Bodenteils (13, 23) aufweist.

14. Unterrahmen für einen Eisenbahnwagenaufbau, wobei der Unterrahmen (10, 20) länglich ist, mit Seitenschwellern (11, 21) längs seiner Längskanten, und ein Bodenteil (13, 23) aufweist, das sich zwischen den Seitenschwellern (11, 21) erstreckt,
dadurch **gekennzeichnet**, daß:
der Unterrahmen (10, 20) Querträger (12, 22) aufweist, die mit den Seitenschwellern (11, 21) verbunden sind und sich zwischen dieser erstrecken;
das Bodenteil (13, 23) so gekrümmt ist, daß es eine konkave Innenoberfläche und eine konvexe Außenoberfläche aufweist, und seine längsseitigen Kanten, die mit den Seitenschwellern (11, 21) verbunden sind, höher sind als sein Abschnitt, der seiner Längsmittellinie entspricht; und
die außenseitige Fläche des Bodenteils (13, 23) mit den Querträgern (12, 22) verbunden ist, wobei die Querträger (12, 22) auf der Seite des Bodenteils (13, 23) entsprechend der konvexen Außenfläche angeordnet sind.

15. Unterrahmen nach Anspruch 14, worin die Längsseitenkanten des Bodenteils (13, 23) zu den Querträgern (12, 22) einen Abstand aufweisen und das Bodenteil (13, 23) die Querträger (12, 22) an dem Abschnitt berührt, der seiner Längsmittellinie entspricht.

16. Unterrahmen nach Anspruch 14, worin die Querträger (12, 22) mindestens einen aufrechten Flansch mit einer gekrümmten oberen Fläche aufweisen, die die Außenoberfläche des Bodenteils (13, 23) berührt und mit dieser übereinstimmt.

17. Unterrahmen nach Anspruch 16, worin die Querträger (22) zwei der genannten aufrechten Flansche aufweisen, so daß die Querträger einen Y-förmigen Querschnitt aufweisen.

18. Unterrahmen nach irgendeinem der Ansprüche 14 bis 17, worin das Bodenteil (13, 23) extrudierte Formen aufweist, deren obere Fläche gekrümmt ist, mit mindestens einem Krümmungsradius quer zur Breite des Unterrahmens.

19. Unterrahmen nach irgendeinem der Ansprüche 14 bis 17, mit mindestens einem Endunterrahmen, der mit dem Unterrahmen (10, 20) über die Seitenschweller (11, 21) verbunden ist, wobei der Endunterrahmen einen Endquerträger und einen Aufbauachsschemel (26) umfaßt.

20. Unterrahmen nach Anspruch 19, worin der Endquerträger (25) an der Kante des Endunterrahmens angeordnet ist, die der Längsmitte des Unterrahmens (10, 20) näher gelegen ist, wobei der Endquerträger (25) aus extrudierten Formen aus Leichtmetallegierung mit einem Dickesteg hergestellt ist, wobei der Steg eine gekrümmte Bodenteil-Tragefläche mit derselben Krümmung wie das Bodenteil (13, 23) zum Tragen des Bodenteils (13, 23) aufweist.

21. Verfahren zum Herstellen eines Eisenbahnwagenaufbaus, mit:
    Bilden eines Dachaufbaus, von Seitenaufbauten (1) und von Endaufbauten;
    Verbinden von Seitenschwellern (11, 21) mit horizontalen Querträgern (12, 22) und Befestigen eines Bodenteils (13, 23) an den Seitenschwellern (11, 21) und den Querträgern (12, 22), um hierdurch einen Unterrahmen zu bilden;
    Verbinden der Seitenaufbauten (1) mit den Seitenschwellern (11, 21) des Unterrahmens (10, 20) und Verbinden der End- und Dachaufbauten hiermit;
    wobei das Bodenteil (13, 23) so gekrümmt ist, daß es eine konkave Innenfläche und eine konvexe Außenfläche aufweist, und seine Längsseitenkanten, die mit den Seitenschwellern (11, 21) verbunden sind, höher sind als sein Abschnitt, der seiner Längsmittellinie entspricht; und

die außenseitige Fläche des Bodenteils (13, 23) mit den Querträgern (12, 22) verbunden ist, wobei die Querträger (12, 22) auf der Seite des Bodenteils (13, 23) entsprechend der konvexen Außenfläche ausgebildet sind.

**Revendications**

1. Caisse de véhicule ferroviaire, comprenant:
   un châssis allongé (10,20) avec des longerons latéraux (11,21) sur ses bords longitudinaux, des structures latérales (1) reliées chacune à un longeron latéral respectif (11,21), une structure de toit et des structures d'extrémités;
   le châssis (10,20) ayant un élément de plancher (13,23) qui s'étend entre les longerons latéraux (11,21) et qui définit la limite entre l'intérieur et l'extérieur de la caisse de véhicule;
   caractérisée en ce que:
   le châssis (10,20) a des traverses horizontales (12, 22) reliées aux longerons latéraux (11,21) et s'étendant entre ces derniers à l'extérieur de la caisse de véhicule;
   l'élément de plancher (13,23) est courbe de façon que ses bords latéraux longitudinaux, qui sont reliés aux longerons latéraux (11,21) soient plus hauts que sa partie correspondant à son axe longitudinal; et
   la surface extérieure de l'élément de plancher (13,23) est reliée aux traverses (12,22).

2. Caisse de véhicule ferroviaire selon la revendication 1, dans laquelle les bords latéraux longitudinaux de l'élément de plancher (13,23) sont espacés par rapport aux traverses (12,22), et l'élément de plancher (13,23) est au contact des traverses (12,22) au niveau de la partie correspondant à son axe longitudinal.

3. Caisse de véhicule ferroviaire selon la revendication 1, dans laquelle les traverses (12,22) ont au moins une aile verticale à surface supérieure courbe au contact et épousant la forme de la surface extérieure de l'élément de plancher (13,23).

4. Caisse de véhicule ferroviaire selon la revendication 3, dans laquelle les traverses (22) ont deux telles ailes verticales, si bien que les traverses ont une section en Y.

5. Caisse de véhicule ferroviaire selon l'une quelconque des revendications précédentes, dans laquelle l'élément de plancher (13,23) constitue une barrière étanche à l'air entre l'intérieur et l'extérieur de la caisse de véhicule.

6. Caisse de véhicule ferroviaire selon l'une quelconque des revendications précédentes, dans laquelle les structures latérales et de toit (1) sont reliées entre elles et les structures latérales (1) sont reliées au châssis (10,20), pour définir une enceinte étanche à l'air.

7. Caisse de véhicule ferroviaire selon l'une quelconque des revendications précédentes, dans laquelle au moins une des structures d'extrémités a un châssis d'extrémité relié par les longerons latéraux (11,21) audit châssis et aux structures latérales (1), le châssis d'extrémité comportant une traverse d'extrémité et une semelle (26) de caisse.

8. Caisse de véhicule ferroviaire selon l'une quelconque des revendications précédentes dans laquelle l'élément de plancher (13,23) comprend une pluralité d'éléments profilés en alliage léger disposés côte à côte dans le sens transversal de la caisse de véhicule.

9. Caisse de véhicule ferroviaire selon l'une quelconque des revendications 1 à 8, dans laquelle l'élément de plancher (13,23) a une surface supérieure courbe ayant au moins un rayon de courbure sur toute la largeur de la caisse de véhicule.

10. Caisse de véhicule ferroviaire selon l'une quelconque des revendications 1 à 7 dans laquelle l'élément de plancher (13,23) comporte des profilés extrudés à nervures d'un seule tenant (15) dépassant de leur surface supérieure, les nervures s'étendant dans le sens longitudinal de la caisse de véhicule.

11. Caisse de véhicule ferroviaire selon l'une quelconque des revendications 1 à 7, dans laquelle les longerons latéraux (11,21) ont des surfaces d'âmes en continuité avec les surfaces extérieures des tôles des structures latérales correspondantes (1).

12. Caisse de véhicule ferroviaire selon l'une quelconque des revendications 1 à 7, dans laquelle les structures latérales (1) ont des rails basculants reliés aux bords respectifs, dans le sens de la largeur, de l'élément de plancher (13,23).

13. Caisse de véhicule ferroviaire selon la revendication 7, dans laquelle la traverse d'extrémité est sur le bord du châssis d'extrémité le plus proche du centre longitudinal du châssis (10,20), la traverse d'extrémité étant en profilés d'alliage léger extrudés dont l'âme à une épaisseur accrue, l'âme avant une surface courbe de support d'élément de plancher pour supporter l'élément de plancher (13,23).

14. Châssis pour caisse de véhicule ferroviaire, le châssis (10,20) étant allongé avec des longerons latéraux (11,21) sur ses bords longitudinaux, et ayant un élément de plancher (13,23) qui s'étend entre les longerons latéraux (11,21);
   caractérisé en ce que:
   le châssis (10,20) a des traverses (12,22) reliées aux longerons latéraux (11,21) et s'étendant entre ces derniers;
   l'élément de plancher (13,23) est courbe de telle manière qu'il a une surface intérieure concave et une surface extérieure convexe, et ses bords latéraux longitudinaux, qui sont reliés aux longerons latéraux (11,21), sont plus hauts que sa partie correspondant à son axe longitudinal; et
   la surface extérieure de l'élément de plancher (13,23) est reliée aux traverses (12,22), les traverses (12,22) étant du côté de l'élément de plancher (13,23) correspondant à la surface extérieure convexe.

15. Châssis selon la revendication 14, dans lequel les bords latéraux longitudinaux de l'élément de plancher (13,23) sont espacés des traverses (12,22), et l'élément de plancher (13,23) est au contact des traverses (12,22) au niveau de la partie correspondant à son axe longitudinal.

16. Châssis selon la revendication 14, dans lequel les traverses (12,22) ont au moins une aile verticale à surface supérieure courbe au contact et épousant la forme de la surface extérieure de l'élément de plancher (13,23).

17. Châssis selon la revendication 16, dans lequel les traverses (22) ont deux telles ailes verticales, si bien que les traverses ont une section en Y.

18. Châssis selon l'une quelconque des revendications 14 à 17, dans lequel l'élément de plancher (13,23) comprend des profilés extrudés, dont la surface supérieure est courbe, ayant au moins un rayon de courbure sur toute la largeur du châssis.

19. Châssis selon l'une quelconque des revendications 14 à 17, ayant au moins un châssis d'extrémité relié au châssis (10,20) par les longerons latéraux (11,21), le châssis d'extrémité comprenant une traverse d'extrémité et une semelle (26) de caisse.

20. Châssis selon la revendication 19, dans lequel la traverse d'extrémité (25) est sur le côté du châssis d'extrémité le plus proche de l'axe longitudinal du châssis (10,20), la traverse d'extrémité (25) étant en profilés d'alliage léger extrudés dont l'âme a une épaisseur accrue, l'âme ayant une surface courbe de support d élément de plancher, laquelle a la même courbure que l'élément de plancher (13,23), pour supporter l'élément de plancher (13,23).

21. Procédé de fabrication d'une caisse de véhicule ferroviaire, comprenant les étapes consistant à:

réaliser une structure de toit des structures latérales (1) et des structures d'extrémités;

relier entre eux des longerons latéraux (11,21) et des traverses horizontales (12,22), et fixer un élément de plancher (13,23) aux longerons latéraux (11,21) et aux traverses (12,22) pour réaliser de ce fait un châssis;

relier les structures latérales (1) aux longerons latéraux (11,21) du châssis (10,20), et relier à celles-ci les structures d'extrémités et de toit;

dans lequel l'élément de plancher (13,23) est courbe de telle manière qu'il a une surface intérieure concave et une surface extérieure convexe, et ses bords latéraux longitudinaux, qui sont reliés aux longerons latéraux (11,21), sont plus hauts que sa partie correspondant à son axe longitudinal; et

la surface extérieure de l'élément de plancher (13,23) est reliée aux traverses (12, 22), les traverses (12,22) étant du côté de l'élément de plancher (13,23) correspondant à la surface extérieure convexe.

## FIG. 1

## FIG. 2

## FIG. 3

## FIG. 4

FIG. 5

FIG. 6

FIG. 7

FIG. 8

*FIG. 9*

*FIG. 10*

*FIG. 11*     *FIG. 12*

## FIG. 13

## FIG. 14